# EUROPEAN PATENT APPLICATION

(11) **EP 4 421 718 A1**
(43) Date of publication of application: **28.08.2024**
(21) Application number: 22882803.4
(22) Date of filing: 17.10.2022
(51) Int. Cl.: G06Q 20/38, G06Q 40/04

(54) **METHOD AND DEVICE FOR VERIFYING ABNORMAL DIGITAL CURRENCY TRANSACTION**

(30) Priority: 19.10.2021 CN 202111213485
(71) Applicant: Digital Currency Institute, The People's Bank of China, Beijing 100071 (CN)
(72) Inventor: MU, Changchun, Beijing 100071 (CN); DI, Gang, Beijing 100071 (CN); ZHAO, Xinyu, Beijing 100071 (CN); CUI, Peidong, Beijing 100071 (CN); YU, Peng, Beijing 100071 (CN); YAN, Jianli, Beijing 100071 (CN)
(74) Representative: Winter, Brandl - Partnerschaft mbB
(86) International application number: PCT/CN2022/125670
(87) International publication number: WO 2023/066197

(57) **Abstract**

Provided are a method and apparatus of verifying an anomalous digital currency transaction, relating to the technical field of computers. One specific embodiment of the method comprises: receiving, by a first terminal application, digital currency transaction information sent from a second terminal application; and executing, by a first terminal application, a corresponding anomaly determination operation according to the network connection state of a first operating institution back-end system, to determine that the digital currency transaction is anomalous, and the anomaly determination operation is one of the following two operations: an operation of searching a local double-spending information list for double-spending information corresponding to the digital currency transaction information and an operation of sending the digital currency transaction information to the first operating institution back-end system for verification.

## Description

### Cross-Reference to Related Application

The present disclosure claims priority to Chinese patent application No.202111213485.9, filed on October 19, 2021 and entitled "Method and Apparatus of Verifying Anomalous Digital Currency Transaction", the contents disclosed in the Chinese patent application is incorporated herein by reference as part or all of the present disclosure.

### Technical Field

The present disclosure relates to the technical field of computers, in particular to a method and apparatus of verifying an anomalous digital currency transaction.

### Background

In existing wallet transactions, both the payee and the payer may perform identity verification and digital currency verification, but there is no effective way to perform double-spending verification of digital currency. Particularly, when the payee is not connected to the Internet, although the identity of the other party and the authenticity of the digital currency can be verified, the double-spending (double-spending refers to being used repeatedly) determination of the digital currency cannot be performed, and there is a relatively high risk in an offline transaction process between institutions.

During the implementation of the present disclosure, the inventor finds that at least the following problems exist in the prior art:
the risk of double spending of the digital currency is high, and double spending cannot be effectively suppressed, so that the transaction security of the digital currency cannot be guaranteed.

### Summary

In view of the above, the embodiments of the present disclosure provide a method and apparatus of verifying an anomalous digital currency transaction.

According to an aspect of an embodiment of the present disclosure a method of verifying an anomalous digital currency transaction is provided.

A method of verifying an anomalous digital currency transaction, comprising: receiving, by a first terminal application, digital currency transaction information sent from a second terminal application; and executing, by the first terminal application, a corresponding anomaly determination operation according to the network connection state of a first operating institution back-end system, to determine that the digital currency transaction is anomalous, wherein the first operating institution back-end system is an operating institution back-end of the first terminal application, and the anomaly determination operation is one of the following two operations: an operation of searching a local double-spending information list for double-spending information corresponding to the digital currency transaction information and an operation of sending the digital currency transaction information to the first operating institution back-end system for verification.

According to one or more embodiments of the present disclosure, the executing, by the first terminal application, a corresponding anomaly determination operation according to the network connection state of a first operating institution back-end system, to determine that the digital currency transaction is anomalous comprises: in cases where the first terminal application does not establish a network connection with the first operating institution back-end system, searching a local double-spending information list for double-spending information corresponding to the digital currency transaction information; and if the double-spending information corresponding to the digital currency transaction information is found, determining, by the first terminal application, that the digital currency transaction is anomalous.

According to one or more embodiments of the present disclosure, the double-spending information in the local double-spending information list is pre-synchronized to the first terminal application by the first operating institution back-end system.

According to one or more embodiments of the present disclosure, when connecting to a network or performing an online service, the first terminal application synchronously obtains the local double-spending information list from the first operating institution back-end system.

According to one or more embodiments of the present disclosure, the local double-spending information list is stored in a local security chip of the first terminal application.

According to one or more embodiments of the present disclosure, the executing, by first terminal application, a corresponding anomaly determination operation according to the network connection state of a first operating institution back-end system, to determine that the digital currency transaction is anomalous comprises: in cases where the first terminal application establishes a network connection with the first operating institution back-end system, searching a local double-spending information list for double-spending information corresponding to the digital currency transaction information, or sending the digital currency transaction information to the first operating institution back-end system for verification; and if the double-spending information corresponding to the digital currency transaction information is found in the local double-spending information list, or a verification result returned by the first operating institution back-end system is that the verification has failed, determining that the digital currency transaction is anomalous.

According to one or more embodiments of the present disclosure, in cases where the first terminal application establishes a network connection with the first operating institution back-end system, an operation of sending the digital currency transaction information to the first operating institution back-end system for verification is preferentially executed.

According to one or more embodiments of the present disclosure, in cases where it is determined that the digital currency transaction is anomalous, the first terminal application sends a blocking request to the first operating institution back-end system, so that the first operating institution back-end system sends the blocking request to a second operating institution back-end system, and blocks the second terminal application and/or a digital currency string of the current transaction by means of the second operating institution back-end system, wherein the second operating institution back-end system is an operating institution back-end of the second terminal application.

According to one or more embodiments of the present disclosure, in cases where the digital currency transaction information is sent to the first operating institution back-end system for verification and it is determined that the digital currency transaction is anomalous, the first terminal application updates the local double-spending information list according to the digital currency transaction information.

According to one or more embodiments of the present disclosure, the double-spending information comprises one or more pieces of user wallet information, digital currency information, and digital currency version information, the digital currency information comprising a digital currency expression and/or a serial number.

According to another aspect of the embodiments of the present disclosure, a method of verifying an anomalous digital currency transaction is provided.

A method of verifying an anomalous digital currency transaction, comprising: receiving, by a first operating institution back-end system, digital currency transaction information sent from a first terminal application, wherein the first operating institution back-end system is an operating institution back-end of the first terminal application, and the digital currency transaction information is sent from a second terminal application to the first terminal application; and using, by the first operating institution back-end system, a double-spending information list to perform double-spending verification on the digital currency transaction information, and if the double-spending verification has failed, returning to the first terminal application a verification result indicating that the digital currency transaction is anomalous.

According to one or more embodiments of the present disclosure, the using, by the first operating institution back-end system, a double-spending information list to perform double-spending verification on the digital currency transaction information comprises: searching, by the first operating institution back-end system, a stored double-spending information list for double-spending information corresponding to the digital currency transaction information, and if the double-spending information corresponding to the digital currency transaction information is found, determining that the double-spending verification has failed.

According to one or more embodiments of the present disclosure, the double-spending information in the stored double-spending information list comprises first double-spending information and second double-spending information, the first double-spending information is generated by the first operating institution back-end system based on an anomaly of one or more of the following information: version information of a digital currency issued by the first operating institution itself, user wallet information corresponding to the issued digital currency, and digital currency information, and the second double-spending information is synchronously obtained by the first operating institution back-end system from other operating institutions back-end systems through interconnection and intercommunication.

According to one or more embodiments of the present disclosure, using, by the first operating institution back-end system, a double-spending information list to perform double-spending verification on the digital currency transaction information comprises: sending, by the first operating institution back-end system, the digital currency transaction information to a first verification platform, the first verification platform searching its own double-spending information list for double-spending information corresponding to the digital currency transaction information, wherein the first verification platform is an operating institution back-end system other than the first operating institution back-end system or a double-spending information sharing platform shared by various operating institutions; and if the double-spending information corresponding to the digital currency transaction information is found, determining that the double-spending verification has failed.

According to one or more embodiments of the present disclosure, the method further comprises: if the double-spending verification is passed, sending, by the first operating institution back-end system, the digital currency transaction information to an issuing institution back-end system of the digital currency of this transaction; performing, by the issuing institution back-end system, information verification on one or more pieces of user wallet information, digital currency information and digital currency version information contained in the digital currency transaction information, and if the information verification has failed, returning, to the first terminal application, a verification result indicating that the digital currency transaction is anomalous.

According to one or more embodiments of the present disclosure, in cases where it is determined that the digital currency transaction is anomalous, the first operating institution back-end system sends a blocking request to a second operating institution back-end system, and blocks the second terminal application and/or a digital currency string of the current transaction by means of the second operating institution back-end system, wherein the second operating institution back-end system is an operating institution back-end of the second terminal application.

According to one or more embodiments of the present disclosure, the blocking request is generated by the first operating institution back-end system, or sent from the first terminal application to the first operating institution back-end system.

According to yet another aspect of embodiments of the present disclosure, a method of verifying an anomalous digital currency transaction is provided.

A method of verifying an anomalous digital currency transaction, comprising: in cases where a second operating institution back-end system establishes a network connection with a second terminal application, before the second terminal application sends digital currency transaction information of a current transaction to a first terminal application, initiating, by the second operating institution back-end system, a double-spending verification of the digital currency transaction information of the current transaction, wherein the second operating institution back-end system is the operating institution back-end of the second terminal application; when the double-spending verification has failed, determining, by the second operating institution back-end system, that the current transaction is anomalous, and terminating the current transaction.

According to yet another aspect of embodiments of the present disclosure, a method of verifying an anomalous digital currency transaction is provided.

A method of verifying an anomalous digital currency transaction, comprising: establishing, by a second operating institution back-end system, a network connection with a second terminal application; performing, by the second operating institution back-end system, double-spending verification on digital currency transaction information which has been sent from the second terminal application in an offline state, wherein the sent digital currency transaction information is sent from the second terminal application to other terminal applications; the second operating institution back-end system blocks the second terminal application when the double-spending verification has failed, wherein the offline state of the second terminal application is a state in which the second terminal application does not establish a network connection with the second operating institution back-end system.

According to yet another aspect of an embodiment of the present disclosure, an apparatus of verifying an anomalous digital currency transaction is provided.

An apparatus of verifying an anomalous digital currency transaction, located in a first terminal application, comprising: a communication module, configured to receive digital currency transaction information sent from a second terminal application; a verification module, configured to execute a corresponding anomaly determination operation according to the network connection state of a first operating institution back-end system, to determine that the digital currency transaction is anomalous, wherein first operating institution back-end system is an operating institution back-end of the first terminal application, and the anomaly determination operation is one of the following two operations: an operation of searching a local double-spending information list for double-spending information corresponding to the digital currency transaction information and an operation of sending the digital currency transaction information to the first operating institution back-end system for verification.

According to yet another aspect of an embodiment of the present disclosure, an apparatus of verifying an anomalous digital currency transaction is provided.

An apparatus for verifying an anomalous digital currency transaction, located in a first operating institution back-end system, comprising: a transaction information receiving module, configured to receive digital currency transaction information sent from a first terminal application, wherein the first operating institution back-end system is the operating institution back-end of the first terminal application, and the digital currency transaction information is sent from a second terminal application to the first terminal application; and a transaction anomaly verification module, configured to use a double-spending information list to perform double-spending verification on the digital currency transaction information, and if the double-spending verification has failed, returning to the first terminal application a verification result indicating that the digital currency transaction is anomalous.

According to yet another aspect of an embodiment of the present disclosure, an apparatus of verifying an anomalous digital currency transaction is provided.

An apparatus of verifying an anomalous digital currency transaction, located in a second operating institution back-end system, comprising: a double-spending verification module, configured to initiate a double-spending verification of the digital currency transaction information of the current transaction in cases where a second operating institution back-end system establishes a network connection with a second terminal application and before the second terminal application sends digital currency transaction information of a current transaction to a first terminal application, wherein the second operating institution back-end system is the operating institution back-end of the second terminal application; a transaction anomaly termination module, configured to determine, if the double-spending verification has failed, that the current transaction is anomalous, and terminate the current transaction.

According to yet another aspect of an embodiment of the present disclosure, an apparatus of verifying an anomalous digital currency transaction is provided.

An apparatus of verifying an anomalous digital currency transaction, located in a second operating institution back-end system, comprising: a network connection establishing module, configured to establish a network connection with a second terminal application; a double-spending information verification module, configured to perform double-spending verification on digital currency transaction information which has been sent from the second terminal application in an offline state, wherein the sent digital currency transaction information is sent from the second terminal application to other terminal applications, and the offline state of the second terminal application is a state in which the second terminal application does not establish a network connection with the second operating institution back-end system; an application blocking module, configured to block the second terminal application if the double-spending verification has failed.

According to yet another aspect of an embodiment of the present disclosure, an electronic device is provided.

An electronic device, comprising: one or more processors; a memory for storing one or more programs, wherein when the one or more programs are executed by the one or more processors, the one or more processors implement the method of verifying an anomalous digital currency transaction provided in the embodiments of the present disclosure.

According to yet another aspect of an embodiment of the present disclosure, a computer-readable medium is provided.

A computer-readable medium, on which a computer program is stored, wherein when the program is executed by a processor, the method of verifying an anomalous digital currency transaction provided in the embodiments of the present disclosure is implemented.

Further effects of the described non-conventional optional modes will be described hereinafter in conjunction with the embodiments.

### Brief Description of the Drawings

The accompanying drawings are used to better understand the present disclosure, and do not constitute limitations to the present disclosure; wherein:
Fig. 1 is a schematic diagram of the main steps of a method of verifying an anomalous digital currency transaction according to an embodiment of the present disclosure;
Fig. 2 is a schematic diagram of the main steps of a method of verifying an anomalous digital currency transaction according to another embodiment of the present disclosure;
Fig. 3 is a schematic diagram of the main steps of a method of verifying an anomalous digital currency transaction according to yet another embodiment of the present disclosure;
Fig. 4 is a schematic diagram of the main steps of a method of verifying an anomalous digital currency transaction according to yet another embodiment of the present disclosure;
Fig. 5 is a schematic flowchart of verifying an anomalous payment transaction according to an embodiment of the present disclosure;
Fig. 6 is a schematic diagram of maintaining an information of double-spending list across institutes according to an embodiment of the disclosure;
Fig. 7 is a schematic diagram of the main modules of an apparatus of verifying an anomalous digital currency transaction according to an embodiment of the present disclosure;
Fig. 8 is a schematic diagram of the main modules of an apparatus of verifying an anomalous digital currency transaction according to another embodiment of the present disclosure;
Fig. 9 is a schematic diagram of the main modules of an apparatus of verifying an anomalous digital currency transaction according to yet another embodiment of the present disclosure;
Fig. 10 is a schematic diagram of the main modules of an apparatus of verifying an anomalous digital currency transaction according to yet another embodiment of the present disclosure;
Fig. 11 is an exemplary system architecture diagram in which the embodiments of the present disclosure may be applied;
Fig. 12 is a schematic structural diagram of a computer system suitable of a terminal device or a server for implementing an embodiment of the present disclosure.

### Detailed Description of the Embodiments

Hereinafter, exemplary embodiments of the present disclosure are illustrated with reference to the accompanying drawings, in which various details of the embodiments of the present disclosure are included to facilitate understanding, and they shall be considered as merely exemplary. Accordingly, a person of ordinary skill in the art would recognize that various changes and modifications of the embodiments described herein can be made without departing from the scope and spirit of the present disclosure. Also, for clarity and conciseness, illustrations of well-known functions and structures are omitted in the following description.

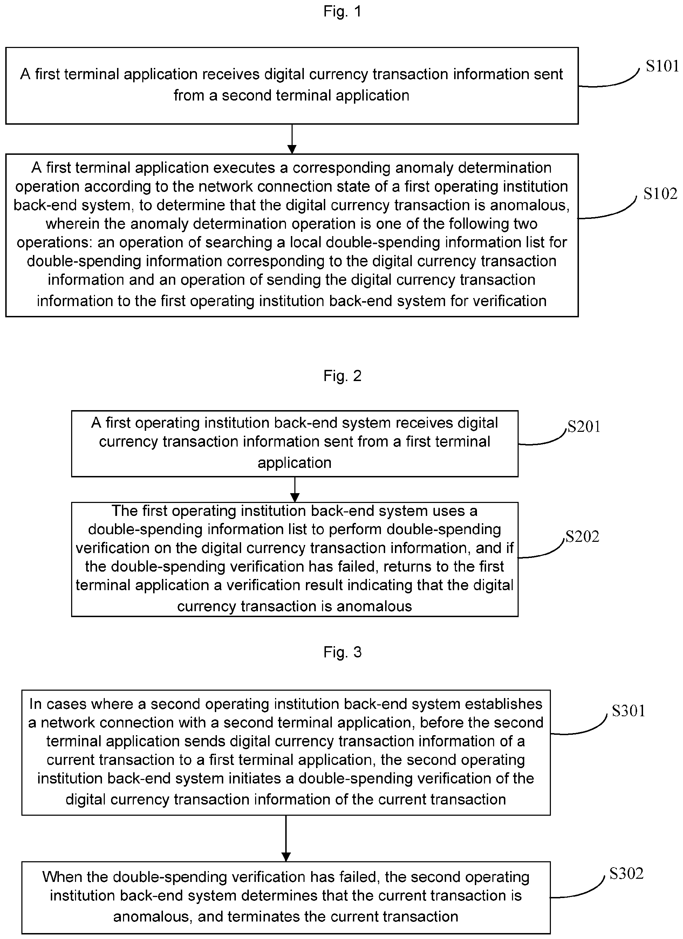

Fig. 1 is a schematic diagram of the main steps of a method of verifying an anomalous digital currency transaction according to an embodiment of the present disclosure. As shown in Fig. 1, the method includes step S101 to step S102.

step S101: a first terminal application receives digital currency transaction information sent from a second terminal application; and

Step S102: a first terminal application executes a corresponding anomaly determination operation according to the network connection state of a first operating institution back-end system, to determine that the digital currency transaction is anomalous, wherein the anomaly determination operation is one of the following two operations: an operation of searching a local double-spending information list for double-spending information corresponding to the digital currency transaction information and an operation of sending the digital currency transaction information to the first operating institution back-end system for verification.

The network connection state of a first operating institution back-end system with the first terminal application comprises: the first terminal application does not establish a network connection with a first operating institution back-end system, and the first terminal application establishes a network connection with a first operating institution back-end system.

In one embodiment, the first terminal application executing a corresponding anomaly determination operation according to the network connection state of a first operating institution back-end system, to determine that the digital currency transaction is anomalous may comprise: in cases where the first terminal application does not establish a network connection with the first operating institution back-end system, searching a local double-spending information list for double-spending information corresponding to the digital currency transaction information; and if the double-spending information corresponding to the digital currency transaction information is found, it is determined that the digital currency transaction is anomalous.

The first operating institution back-end system is the operating institution back-end of the first terminal application.

The double-spending information in the local double-spending information list is pre-synchronized to the first terminal application by the first operating institution back-end system.

When connecting to a network or performing an online service, the first terminal application synchronously obtains the local double-spending information list from the first operating institution back-end system. For example, when the first terminal application is online, the first operating institution back-end system sends double-spending information to the first terminal application, for example, the double-spending information can be sent and updated together when performing processes such as recharging, withdrawing and synchronising.

The double-spending information list of the first operating institution back-end system can be synchronized from other operating institution systems. In the embodiments of the present disclosure, various operating institutions can jointly maintain double-spending information, so as to realize double-spending information verification across operating institutions.

The local double-spending information list is stored in a local security chip of the first terminal application. By storing double-spending information in a security chip at an end side, it can be ensured that double-spending information can be verified when the first terminal application is offline, wherein offline means that the first terminal application does not establish a network connection with the first operating institution back-end system.

In another embodiment, the first terminal application executing a corresponding anomaly determination operation according to the network connection state of a first operating institution back-end system, to determine that the digital currency transaction is anomalous may comprise: in cases where the first terminal application establishes a network connection with the first operating institution back-end system, searching a local double-spending information list for double-spending information corresponding to the digital currency transaction information, or sending the digital currency transaction information to the first operating institution back-end system for verification; if double-spending information corresponding to the digital currency transaction information is found in the local double-spending information list, determining that there is an anomaly in the digital currency transaction, and if the corresponding double-spending information is not found, determining that there is no anomaly; or, if the verification result returned by the first operating institution back-end system is that the verification has failed, determining that the digital currency transaction is anomalous, and if the returned verification result is that the verification is passed, determining that there is no anomaly.

In one embodiment, in cases where the first terminal application establishes a network connection with the first operating institution back-end system, the first terminal application is configured to preferentially execute an operation of sending the digital currency transaction information to the first operating institution back-end system for verification.

In cases where it is determined that the digital currency transaction is anomalous, the first terminal application sends a blocking request to the first operating institution back-end system, so that the first operating institution back-end system sends the blocking request to a second operating institution back-end system, and blocks the second terminal application and/or a digital currency string of the current transaction by means of the second operating institution back-end system, wherein the second operating institution back-end system is the operating institution back-end of the second terminal application.

In cases where the digital currency transaction information is sent to the first operating institution back-end system for verification and it is determined that the digital currency transaction is anomalous, the first terminal application updates the local double-spending information list according to the digital currency transaction information.

The double-spending information comprises one or more pieces of user wallet information, digital currency information, and digital currency version information, the digital currency information comprising a digital currency expression and/or a serial number.

According to the embodiments of the present disclosure, a transaction counterparty can be checked (or referred to as verified) during a transaction process, wherein when a terminal application is offline, verification is performed according to local double-spending information; when the terminal application is online, verification can be performed using local double-spending information, or it is sent to the operating institution back-end for verification, so as to prevent double spending of an illegal or anomalous wallet or double spending of digital currency. In addition, an illegal or anomalous wallet can be blocked, so as to prohibit a transaction counterparty from continuing a transaction, thereby reducing the risk of double-spending of the digital currency. Furthermore, in the embodiments of the present disclosure, double-spending verification may be performed from multiple dimensions, for example, the double-spending information may include user wallet information such as a wallet ID and a user public key, so as to make a determination on a user; may also comprise digital currency information, such as an entire expression or a serial number, so as to make a determination on the digital currency; may also include version information, so as to make a determination on a digital currency or a wallet application version, thereby achieving risk control from different dimensions. Meanwhile, the terminal application may report the anomaly to the operating institution back-end, and update the local double-spending information list, so as to reduce the storage pressure.

Fig. 2 is a schematic diagram of the main steps of a method of verifying an anomalous digital currency transaction according to another embodiment of the present disclosure. As shown in Fig. 2, the method includes steps S201 to S202.

Step S201: a first operating institution back-end system receives digital currency transaction information sent from a first terminal application,

The first operating institution back-end system is the operating institution back-end of the first terminal application, and the digital currency transaction information is sent from a second terminal application to the first terminal application.

Step S202: the first operating institution back-end system uses a double-spending information list to perform double-spending verification on the digital currency transaction information, and if the double-spending verification has failed, returns to the first terminal application a verification result indicating that the digital currency transaction is anomalous.

In one embodiment, the first operating institution back-end system using a double-spending information list to perform double-spending verification on the digital currency transaction information comprises: the first operating institution back-end system searching a stored double-spending information list for double-spending information corresponding to the digital currency transaction information, and if the double-spending information corresponding to the digital currency transaction information is found, determining that the double-spending verification has failed.

The double-spending information in the stored double-spending information list comprises first double-spending information and second double-spending information, the first double-spending information is generated by the first operating institution back-end system based on an anomaly of one or more of the following information: version information of a digital currency issued by the first operating institution itself, user wallet information corresponding to the issued digital currency, and digital currency information, and the second double-spending information is synchronously obtained by the first operating institution back-end system from the back-end systems of other operating institutions through interconnection and intercommunication.

In one embodiment, the first operating institution back-end system using a double-spending information list to perform double-spending verification on the digital currency transaction information comprises: the first operating institution back-end system sending the digital currency transaction information to a first verification platform, the first verification platform searching its own double-spending information list for double-spending information corresponding to the digital currency transaction information, wherein the first verification platform is an operating institution back-end system other than the first operating institution back-end system or a double-spending information sharing platform shared by various operating institutions; and if the double-spending information corresponding to the digital currency transaction information is found, determining that the double-spending verification has failed.

According to the above embodiments, if the corresponding double-spending information is found, then the double-spending verification has failed, and thus it is determined that there is an anomaly in a digital currency transaction; and if the corresponding double-spending information is not found, then the double-spending verification is passed, and thus it is determined that there is no anomaly in the transaction.

In another embodiment, on the basis of the above embodiment, the method further comprises: if the double-spending verification is passed, the first operating institution back-end system sending the digital currency transaction information to an issuing institution back-end system of the digital currency of this transaction; performing, by the issuing institution back-end system, information verification on one or more pieces of user wallet information, digital currency information and digital currency version information contained in the digital currency transaction information, and if the information verification has failed, returning, to the first terminal application, a verification result indicating that the digital currency transaction is anomalous. That is, in cases where both the double-spending verification and the information verification are passed, it is determined that there is no anomaly in the transaction, and in cases where any one of the double-spending verification and the information verification has failed, it is determined that there is an anomaly in the digital currency transaction.

In the embodiments of the present disclosure, a digital currency issuing institution maintains the specific transaction information of the digital currency; other operating institutes send, by means of an interconnection and intercommunication platform, relevant transaction information of the currency string to the issuing institution; and the issuing institution determines the situation of double-spending of the currency string.

In cases where it is determined that the digital currency transaction is anomalous, the first operating institution back-end system sends a blocking request to a second operating institution back-end system, and blocks the second terminal application and/or a digital currency string of the current transaction by means of the second operating institution back-end system, wherein the second operating institution back-end system is the operating institution back-end of the second terminal application.

The blocking request is generated by the first operating institution back-end system, or sent from the first terminal application to the first operating institution back-end system.

In the embodiments of the present disclosure, during a transaction process, legality verification is performed on two parties of a transaction; if double spending of the user or the digital currency is detected, the transaction will be rejected and uploaded to the back-end, or the application thereof is blocked; and blocking can be initiated by a first terminal application or a first operating institution back-end system, thereby effectively reducing the risk of double spending and ensuring the transaction security of the digital currency.

Fig. 3 is a schematic diagram of the main steps of a method of verifying an anomalous digital currency transaction according to yet another embodiment of the present disclosure. As shown in Fig. 3, the method includes steps S301 to S302.

Step S301: in cases where a second operating institution back-end system establishes a network connection with a second terminal application, before the second terminal application sends digital currency transaction information of a current transaction to a first terminal application, the second operating institution back-end system initiates a double-spending verification of the digital currency transaction information of the current transaction,

The second operating institution back-end system is the operating institution back-end of the second terminal application.

Step S302: when the double-spending verification has failed, the second operating institution back-end system determines that the current transaction is anomalous, and terminates the current transaction.

In one embodiment, the second operating institution back-end system initiating a double-spending verification of the digital currency transaction information of the current transaction comprises: the second operating institution back-end system performing, by means of a double-spending information list of a second verification platform, double-spending verification on the digital currency transaction information of the current transaction, wherein the second verification platform is an operating institution back-end system other than the second operating institution back-end system or a double-spending information sharing platform shared by various operating institutions; and in cases where the double-spending information list contains the double-spending information corresponding to the digital currency transaction information of the current transaction, determining that the double-spending verification has failed. If there is the corresponding double-spending information, the double-spending verification has failed.

In another embodiment, the second operating institution back-end system initiating a double-spending verification of the digital currency transaction information of the current transaction comprises: the second operating institution back-end system sending digital currency transaction information of the current transaction to the issuing institution back-end system of the digital currency of the current transaction; performing, by the issuing institution back-end system, information verification on one or more pieces of user wallet information, digital currency information and digital currency version information contained in the digital currency transaction information; and when the information verification has failed, determining that the double-spending verification has failed. If the information verification is passed, it indicates that the double-spending verification is also passed.

In one embodiment, the two cases of the described embodiment may be combined, i.e. double-spending verification may be first performed on digital currency transaction information of a current transaction by means of a double-spending information list of a second verification platform. For example, the double-spending information list contains double-spending information corresponding to the digital currency transaction information of the current transaction; if the corresponding double-spending information is found, it is directly determined that there is an anomaly in the transaction; if the corresponding double-spending information is not found, then digital currency transaction information of the current transaction is further sent to the issuing institution back-end system of the digital currency of the current transaction; the issuing institution back-end system performs the described information verification; if the corresponding double-spending information is not found and the information verification is passed, it is determined that there is no anomaly in the transaction; and if the corresponding double-spending information is found or the information verification has failed, it is determined that there is an anomaly in the transaction, i.e. determining the presence of double-spending.

The second operating institution back-end system terminates the current transaction by blocking the second terminal application and/or the digital currency string of the current transaction.

In the embodiments of the present disclosure, during a transaction process, if double-spending of the user or digital currency is determined, the transaction will be rejected and uploaded to the back-end, or the application thereof is blocked, and blocking may be initiated by a second operating institution back-end system, thereby effectively reducing the risk of repeated double-spending, and ensuring the transaction security of the digital currency.

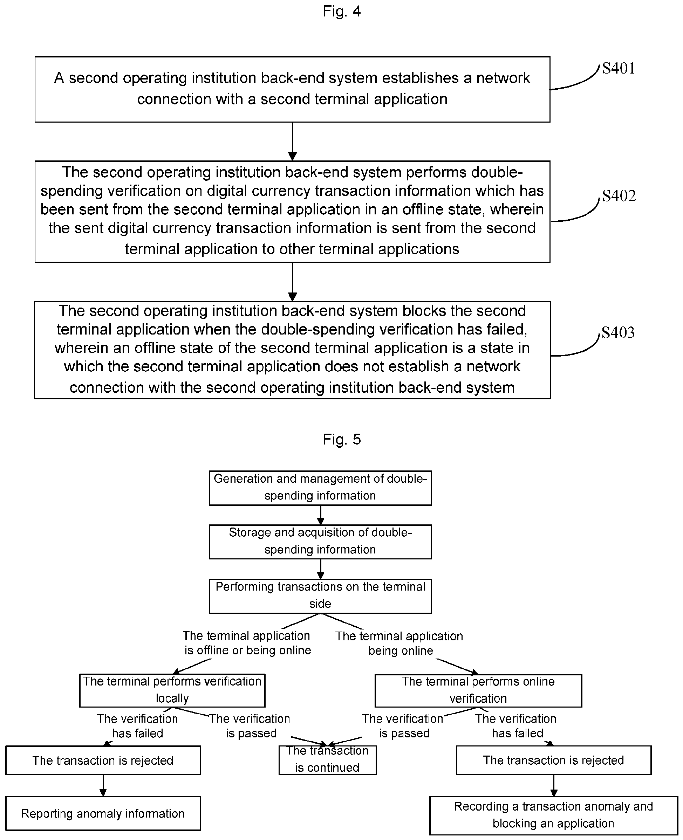

Fig. 4 is a schematic diagram of the main steps of a method of verifying an anomalous digital currency transaction according to yet another embodiment of the present disclosure. As shown in Fig. 4, the method includes steps S401 to S402:
step S401: a second operating institution back-end system establishes a network connection with a second terminal application;
step S402: the second operating institution back-end system performs double-spending verification on digital currency transaction information which has been sent from the second terminal application in an offline state, wherein the sent digital currency transaction information is sent from the second terminal application to other terminal applications;
step S403: the second operating institution back-end system blocks the second terminal application when the double-spending verification has failed, wherein an offline state of the second terminal application is a state in which the second terminal application does not establish a network connection with the second operating institution back-end system.

The second operating institution back-end system performing double-spending verification on digital currency transaction information which has been sent from the second terminal application in an offline state comprises:
the second operating institution back-end system performing, by means of a double-spending information list of a third verification platform, double-spending verification on the digital currency transaction information which has been sent, wherein the third verification platform is a back-end system of an operating institutions other than the second operating institution back-end system or a double-spending information sharing platform shared by various operating institutions; in cases where the double-spending information list contains the double-spending information corresponding to the digital currency transaction information which has been sent, determining that the double-spending verification has failed; and if the corresponding double-spending information does not exist, determining that the double-spending verification has failed.

The present embodiment is applicable to a scenario where a second terminal application establishes a network connection with a second operating institution back-end system due to various services (such as top-up and a new transaction) after a transaction between the second terminal application and other terminal applications is completed in an offline condition, so that after the second operating institution back-end system establishes a network connection with the second terminal application, the second operating institution back-end system can actively perform double-spending verification on digital currency transaction information which has been sent from the second terminal application in an offline state, and actively initiate blocking of the second terminal application, thereby effectively reducing the risk of repeated double-spending and ensuring the transaction security of digital currency.

Fig. 5 is a schematic flowchart of verifying an anomalous payment transaction according to an embodiment of the present disclosure. As shown in Fig. 5, the flow comprises: generation and management of double-spending information; storage and acquisition of double-spending information; a terminal side performing transactions; performing transaction information verification, wherein if a terminal application is online (i. e. the terminal application establishes a network connection with operating institution back-end thereof), verification can be performed locally on the terminal or by means of terminal networking, and if the terminal application is offline (i.e. the terminal application does not establish a network connection with the operating institution back-end thereof), performing verification locally on the terminal; if the verification is passed, continuing the transaction; if the verification has failed, rejecting the transaction, wherein after the terminal locally does not pass the verification and rejects the transaction, the terminal application may report anomaly information to the operating institution back-end; after verification is performed by means of terminal networking and the transaction is rejected, the operating institution back-end may record the transaction anomaly and block the application.

The following describes in details the generation and management of double-spending information, storage and acquisition of double-spending information, double-spending verification, and terminal application blocking which are involved in the embodiments of the present disclosure.

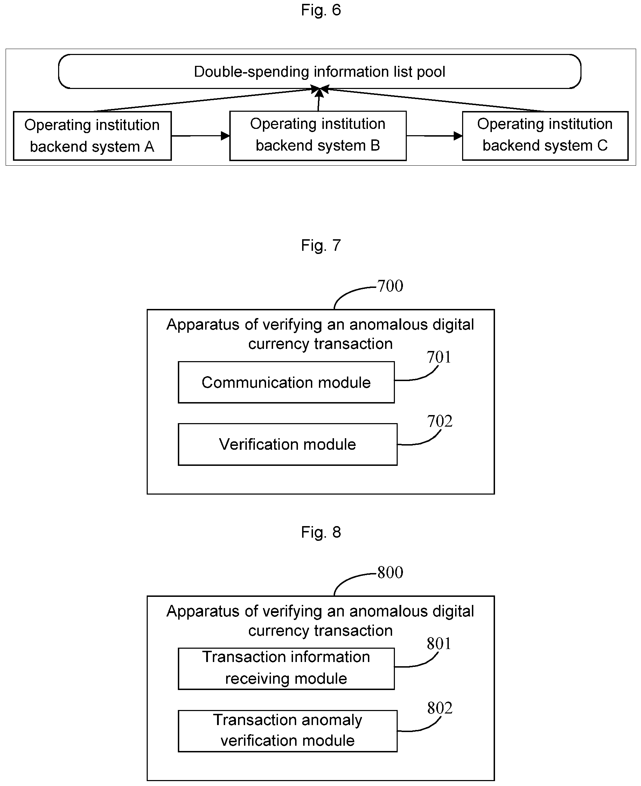

Generation and management of double-spending information. For example, the operating institution back-end may generate a double-spending information list by means of behaviors such as system version information of a digital currency issued by itself, discovery of a program BUG (defect), and an anomaly of a user's wallet; when cross-institution (cross-operating institution) transaction information is collected, various operating institutions send the transaction information and the digital currency information to an issuing institution through interconnection and intercommunication (the issuing institution refers to an operating institution responsible for issuing the digital currency, or referred to as an issuing system); the transaction information may comprise one or more pieces of user wallet information, digital currency information, and digital currency version information, and the digital currency information may comprise a digital currency expression and/or a serial number. The issuing institution makes a determination according to the information of each transaction node, and if a certain node is found to be over quota, the user or digital currency information of the node may be listed as double-spending information and synchronized to a double-spending information management module, and the double-spending information management module is a double-spending information sharing platform. The double-spending information is synchronized from various operating institution back-end systems. The various operating institutions may use a centralized or block chain manner to jointly maintain double-spending information of a user or digital currency. A schematic diagram of maintaining double-spending information list cross institutions according to an embodiment of the present disclosure is shown in Fig. 6. In Fig. 6, three institutions are taken as an example, and the number of institutions does not limit the scope of protection of the embodiments of the present disclosure. The issuing (or referred to as operating) institution for issuing digital currency maintains the quota of the digital currency, and if double-spending of the digital currency is detected, then the owner of double-spending is updated to a double-spending information list (pool). Each operating institution has a respective institution back-end management module. The institution back-end management module is used for the operating institution to synchronize double-spending information of other operating institutions, and to add, delete or update double-spending information of the present operating institution, and may synchronize double-spending information of the present operating institution to other operating institutions periodically or under an agreed condition. When the wallet or the digital currency status is normal or logged out, each operating institution synchronously updates the double-spending information to the double-spending information management module. When a user or digital currency is logged out, the double-spending application is blocked, the double-spending information list may be updated to reduce the storage pressure. The operating institution back-end system may also acquire the latest double-spending information and synchronize same to a corresponding terminal application (for example, a first operating institution back-end system synchronizes a double-spending information list to a first terminal application), and performs management verification on currency string transaction information issued by the present operating institution. When a wallet user (i.e. the terminal application) is online, the operating institution back-end will push a current double-spending information list to the wallet user, and the double-spending information list may contain, for example, a wallet ID, public key information, digital currency, currency identifier, version information, etc. In this way, during a subsequent transaction, both parties of the transaction verify the double-spending information list, and if double-spending of the user or the digital currency is determined, the transaction will be rejected. When the payee is online, verification may be performed by the operating institution back-end, and the double-spending wallet application may be blocked by an instruction, so that subsequent transactions cannot be continued, the risk of repeated double-spending is effectively reduced, and the transaction security of digital currency is guaranteed.

Storage and acquisition of double-spending information. For example, a terminal user may synchronize double-spending information in the following situations: 1, the terminal user is connected to a network; 2, the terminal user performs an online service, for example, operations such as opening, recharging, withdrawal, synchronization, logging out, and query; and 3, the double-spending information is synchronized by the transaction counterparty, the transaction counterparty referring to another terminal application performing transactions with the current terminal application. A terminal user may store double-spending information in a local security of a terminal application, and the locally stored double-spending information facilitates double-spending verification during an offline transaction.

Double-spending verification. For example, in a transaction process, two parties of a transaction (i. e. a first terminal application and a second terminal application) perform double-spending information verification on the transaction counterparty. A verification manner may be that double-spending information is verified locally, and also may be that transaction information (i.e. the digital currency transaction information) is sent to a corresponding operating institution back-end system by means of a communication module for verification, and the operating institution back-end returns a verification result. The double-spending information may contain the following information: digital currency version information for representing a digital currency version or a wallet application version; user information, including but not limited to a wallet ID (identifier), a user public key, a user certificate, a wallet token, etc.; digital currency information, including but not limited to a digital currency expression, a serial number, a digital currency identifier, etc. If the verification is passed, the transaction continues, and if the verification has failed, this transaction is terminated, and transaction counterparty information is reported to the operating institution back-end system corresponding to the present terminal application.

Application blocking. As an example embodiment, when verification fails, in cases where a user is connected to a network, a terminal application may report an anomaly to the operating institution back-end of the terminal application; the operating institution back-end generates an application blocking instruction, performs a blocking operation on a wallet application (i.e. a terminal application) of a transaction counterparty, forbids same to continue a transaction, and updates local double-spending information at the same time, so as to reduce storage pressure.

The embodiments of the present disclosure are not affected by the terminal form and the communication mode, and may be widely applied to hardware wallets of various terminal forms, including but not limited to an IC card, a mobile phone terminal, a receiving terminal, an Internet of Things terminal, etc., and the communication mode includes but is not limited to Near Field Communication (NFC), Bluetooth, WIFI, Ultra Wide Band (UWB), a two-dimensional code, etc. In this way, the problematic wallet or the digital currency may be refused, reported and managed in the transaction process, and the application may be blocked (for example, blocking the terminal application of the payer by means of the operating institution back-end of the payer, the terminal application of the payer may be a second terminal application, and accordingly, the operating institution back-end of the payer may be a second operating institution back-end system), and therefore the security in a transaction process is greatly improved, system risks such as malicious users and a program BUG (defect) are effectively avoided, the smooth operation of the digital currency is guaranteed, and the promotion of a digital currency hardware wallet is facilitated.

Fig. 7 is a schematic diagram of the main modules of an apparatus of verifying an anomalous digital currency transaction according to an embodiment of the present disclosure. As shown in Fig. 7, the apparatus 700 of verifying the anomalous digital currency transaction in one embodiment of the present disclosure is located in a first terminal application, and the apparatus 700 of verifying the anomalous digital currency transaction mainly comprises a communication module 701 and a verification module 702.

The communication module 701 is configured to receive digital currency transaction information sent from a second terminal application;

The verification module 702 is configured to execute a corresponding anomaly determination operation according to the network connection state of a first operating institution back-end system, to determine that the digital currency transaction is anomalous, wherein first operating institution back-end system is the operating institution back-end of the first terminal application, and the anomaly determination operation is one of the following two operations: an operation of searching a local double-spending information list for double-spending information corresponding to the digital currency transaction information and an operation of sending the digital currency transaction information to the first operating institution back-end system for verification.

In one embodiment, the verification module 702 may be configured to search a local double-spending information list for double-spending information corresponding to the digital currency transaction information in cases where the first terminal application does not establish a network connection with the first operating institution back-end system, and if the double-spending information corresponding to the digital currency transaction information is found, determine that the digital currency transaction is anomalous.

The double-spending information in the local double-spending information list is pre-synchronized to the first terminal application by the first operating institution back-end system.

The communication module 701 is responsible for establishing a communication connection between a first terminal application and a first operating institution back-end system. The communication module 701 may synchronously obtain a local double-spending information list from the first operating institution back-end system when the first terminal application connects to a network or performs an online service.

The apparatus 700 of verifying an anomalous digital currency transaction further comprises a security chip storage module for storing a local double-spending information list in a security chip of a local first terminal application.

The security chip storage module is responsible for locally storing double-spending information, so as to perform local verification when an offline transaction is subsequently performed.

In another embodiment, the verification module 702 is configured to: in cases where the first terminal application establishes a network connection with the first operating institution back-end system, search a local double-spending information list for double-spending information corresponding to the digital currency transaction information, or send the digital currency transaction information to the first operating institution back-end system for verification; and if the double-spending information corresponding to the digital currency transaction information is found in the local double-spending information list, or a verification result returned by the first operating institution back-end system is that the verification has failed, determine that the digital currency transaction is anomalous.

In one embodiment, in cases where the first terminal application establishes a network connection with the first operating institution back-end system, the verification module 702 preferentially executes an operation of sending the digital currency transaction information to the first operating institution back-end system for verification.

The communication module 701 is further configured to send a blocking request to the first operating institution back-end system in cases where it is determined that the digital currency transaction is anomalous, so that the first operating institution back-end system sends the blocking request to a second operating institution back-end system, and blocks the second terminal application and/or a digital currency string of the current transaction by means of the second operating institution back-end system, wherein the second operating institution back-end system is the operating institution back-end of the second terminal application.

In cases where the verification module 702 sends the digital currency transaction information to the first operating institution back-end system for verification, and determines that there is an anomaly in the digital currency transaction, the security chip storage module is further configured to update the local double-spending information list according to the digital currency transaction information.

The double-spending information comprises one or more pieces of user wallet information, digital currency information, and digital currency version information, the digital currency information comprising a digital currency expression and/or a serial number.

Fig. 8 is a schematic diagram of the main modules of an apparatus of verifying an anomalous digital currency transaction according to another embodiment of the present disclosure. The apparatus 800 of verifying the anomalous digital currency transaction according to another embodiment of the present disclosure is located in a first operating institution back-end system, and the apparatus 800 of verifying an anomalous digital currency transaction mainly comprises a transaction information receiving module 801 and a transaction anomaly verification module 802.

The transaction information receiving module 801 is configured to receive digital currency transaction information sent from a first terminal application, wherein the first operating institution back-end system is the operating institution back-end of the first terminal application, and the digital currency transaction information is sent from a second terminal application to the first terminal application; and
the transaction anomaly verification module 802 is configured to use a double-spending information list to perform double-spending verification on the digital currency transaction information, and if the double-spending verification has failed, returning to the first terminal application a verification result indicating that the digital currency transaction is anomalous.

In one embodiment, the transaction anomaly verification module 802 is configured to: search a stored double-spending information list for double-spending information corresponding to the digital currency transaction information, and if the double-spending information corresponding to the digital currency transaction information is found, determine that the double-spending verification has failed.

The double-spending information in the stored double-spending information list comprises first double-spending information and second double-spending information, the first double-spending information is generated by the first operating institution back-end system based on an anomaly of one or more of the following information: version information of a digital currency issued by the first operating institution itself, user wallet information corresponding to the issued digital currency, and digital currency information, and the second double-spending information is synchronously obtained by the first operating institution back-end system from the back-end systems of other operating institutions through interconnection and intercommunication.

In one embodiment, the transaction anomaly verification module 802 is configured to: send the digital currency transaction information to a first verification platform, wherein the first verification platform searches its own double-spending information list for double-spending information corresponding to the digital currency transaction information, and first verification platform is an operating institution back-end system other than the first operating institution back-end system or a double-spending information sharing platform shared by various operating institutions; and if the double-spending information corresponding to the digital currency transaction information is found, determine that the double-spending verification has failed.

In one embodiment, the transaction anomaly verification module 802 is further configured to send the digital currency transaction information to an issuing institution back-end system of the digital currency of this transaction if the double-spending verification is passed; performing, by the issuing institution back-end system, information verification on one or more pieces of user wallet information, digital currency information and digital currency version information contained in the digital currency transaction information, and if the information verification has failed, returning, to the first terminal application, a verification result indicating that the digital currency transaction is anomalous.

The transaction anomaly verification module 802 is further configured to send a blocking request to a second operating institution back-end system when it is determined that the digital currency transaction is anomalous, and to block the second terminal application and/or a digital currency string of the current transaction by means of the second operating institution back-end system, wherein the second operating institution back-end system is the operating institution back-end of the second terminal application.

The blocking request may be generated by the first operating institution back-end system, or sent from the first terminal application to the first operating institution back-end system.

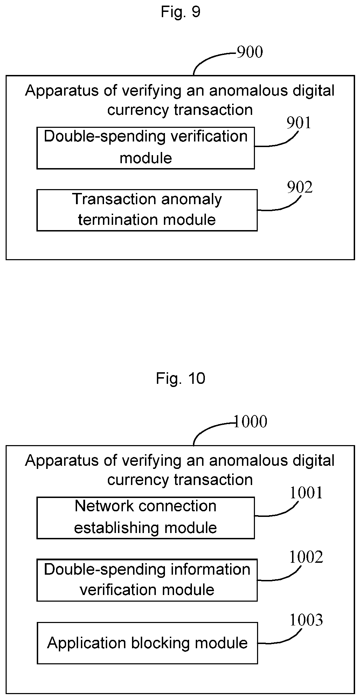

Fig. 9 is a schematic diagram of the main modules of an apparatus of verifying an anomalous digital currency transaction according to yet another embodiment of the present disclosure. The apparatus 900 of verifying an anomalous digital currency transaction according to yet another embodiment of the present disclosure is located in the second operating institution back-end system. The apparatus 900 of verifying an anomalous digital currency transaction comprises a double-spending verification module 901 and a transaction anomaly termination module 902.

The double-spending verification module 901 is configured to initiate a double-spending verification of the digital currency transaction information of the current transaction in cases where a second operating institution back-end system establishes a network connection with a second terminal application and before the second terminal application sends digital currency transaction information of a current transaction to a first terminal application, wherein the second operating institution back-end system is the operating institution back-end of the second terminal application;
the transaction anomaly termination module 902 is configured to determine, if the double-spending verification has failed, that the current transaction is anomalous, and terminate the current transaction.

In one embodiment, the double-spending verification module 901 is configured to perform, by means of a double-spending information list of a second verification platform, double-spending verification on the digital currency transaction information of the current transaction, wherein the second verification platform is an operating institution back-end system other than the second operating institution back-end system or a double-spending information sharing platform shared by various operating institutions; in cases where the double-spending information list contains the double-spending information corresponding to the digital currency transaction information of the current transaction, determining that the double-spending verification has failed; If the double-spending information is not found, the double-spending verification is passed, it is determined that there is no anomaly in the current transaction, and subsequent operations of the transaction are continued.

In one embodiment, the double-spending verification module 901 is configured to send digital currency transaction information of the current transaction to an issuing institution back-end system of the digital currency of the current transaction; perform, by the issuing institution back-end system, information verification on one or more pieces of user wallet information, digital currency information and digital currency version information contained in the digital currency transaction information; and when the information verification has failed, determine that the double-spending verification has failed. If the information verification is passed, then the double-spending verification is passed, it is determined that there is no anomaly in the current transaction, and subsequent operations of the transaction are continued.

In one embodiment, the functions of the double-spending verification module 901 in the described two embodiments may be combined, i.e. the double-spending verification module 901 may first perform double-spending verification on digital currency transaction information of a current transaction by means of a double-spending information list of a second verification platform; if the double-spending verification is passed, then the digital currency transaction information of the current transaction is further sent to the issuing institution back-end system of the digital currency of the current transaction for further information verification; and if the information verification is also passed, it indicates that there is no anomaly in the current transaction, and subsequent operations of the transaction are continued. If one of the double-spending verification and the information verification has failed, it indicates that the current transaction is anomalous, and thus the current transaction is terminated.

The transaction anomaly termination module 902 is configured to terminate the current transaction by blocking the second terminal application and/or the digital currency string of the current transaction.

Fig. 10 is a schematic diagram of the main modules of an apparatus of verifying an anomalous digital currency transaction according to yet another embodiment of the present disclosure. As shown in Fig. 10, the apparatus 1000 of verifying an anomalous digital currency transaction according to yet another embodiment of the present disclosure is located in the second operating institution back-end system, and the apparatus 1000 of verifying an anomalous digital currency transaction comprises a network connection establishing module 1001, a double-spending information verification module 1002 and an application blocking module 1003.

The network connection establishing module 1001 is configured to establish a network connection with a second terminal application;
the double-spending information verification module 1002 is configured to perform double-spending verification on digital currency transaction information which has been sent from the second terminal application in an offline state, wherein the sent digital currency transaction information is sent from the second terminal application to other terminal applications, and the offline state of the second terminal application is a state in which the second terminal application does not establish a network connection with the second operating institution back-end system;
the application blocking module 1003 is configured to block the second terminal application if the double-spending verification has failed.

The double-spending information verification module 1002 may be configured to perform, by means of a double-spending information list of a third verification platform, double-spending verification on the digital currency transaction information which has been sent, wherein the third verification platform is an operating institution back-end system other than the second operating institution back-end system or a double-spending information sharing platform shared by various operating institutions; in cases where the double-spending information corresponding to the digital currency transaction information which has been sent exists in the double-spending information list, determine that the double-spending verification has failed.

In addition, the specific implementation content of the apparatus of verifying an anomalous digital currency transaction according to the embodiments of the present disclosure has been described in detail in the above method of verifying an anomalous digital currency transaction, and therefore it will not be repeated herein.

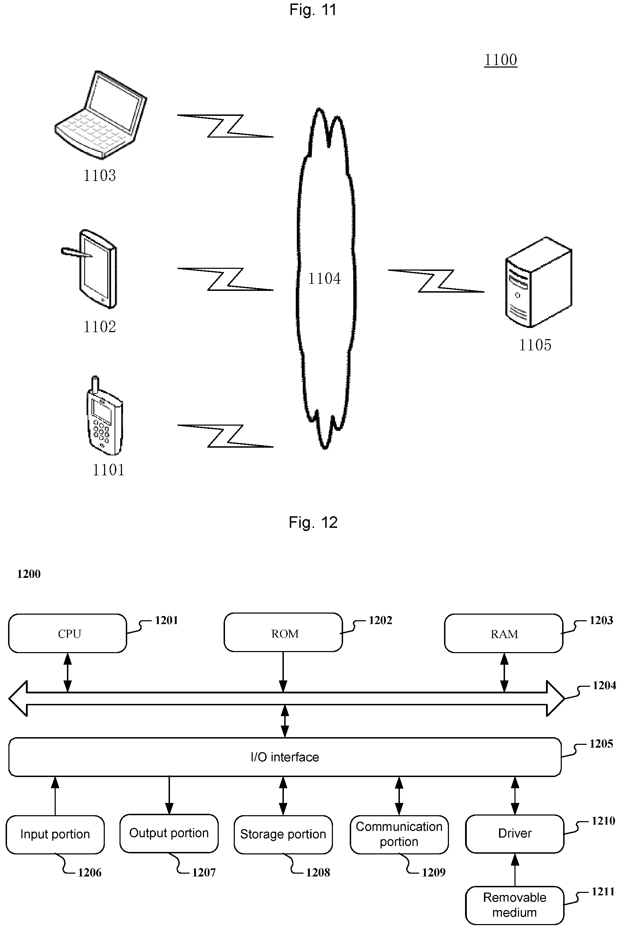

Fig. 11 shows an exemplary system architecture 1100 of a method of verifying an anomalous digital currency transaction or an apparatus of verifying an anomalous digital currency transaction to which the embodiments of the present disclosure may be applied.

As shown in Fig. 11, the system architecture 1100 may comprise terminal devices 1101, 1102, 1103, a network 1104, and a server 1105. The network 1104 is a medium that may be used to provide communication links between the terminal devices 1101, 1102, 1103 and the server 1105. The network 1104 may comprise a variety of connection types, such as a wire, a wireless communication link or a fiber optic cable.

A user may use the terminal devices 1101, 1102, 1103 to interact with the server 1105 over the network 1104, to receive or send messages, etc. Various communication client applications, such as shopping applications, webpage browser applications, search applications, instant messaging tools, mailbox clients, and social platform software (only examples), may be installed on the terminal devices 1101, 1102 and 1103.

The terminal devices 1101, 1102, and 1103 may be various electronic devices that have a display screen and support webpage browsing, including but not limited to a smart phone, a tablet computer, a laptop portable computer, a desktop computer, etc.

The server 1105 may be a server providing various services, for example, a back-end management server providing support for shopping websites browsed by users by using the terminal devices 1101, 1102 and 1103 (for example only). The back-end management server may perform processing such as analysis on the received data such as transaction information, and feed back a processing result (such as a transaction result, for example only) to the terminal device.

It should be noted that the method of verifying an anomalous digital currency transaction provided in the embodiment of the present disclosure is generally executed by the server 1105 or the terminal devices 1101, 1102 and 1103, and correspondingly, the apparatus for verifying an anomalous digital currency transaction is generally arranged in the server 1105 or the terminal devices 1101, 1102 and 1103.

It should be understood that the numbers of the terminal devices, networks, and servers in Fig. 11 are only illustrative. The numbers of the terminal devices, networks, and servers can be configured according to actual requirements.

Referring now to Fig. 12 which shows a structure diagram of a computer system 1200 of a terminal device or a server suitable for implementing an embodiment of the present disclosure. The terminal device or server shown in Fig. 12 is only an example, and should not bring any limitation to the functions and use scope of the embodiments of the present disclosure.

As shown in Fig. 12, the computer system 1200 comprises a central processing unit (CPU) 1201 that can perform various suitable actions and processes in accordance with a program stored in a read only memory (ROM) 1202 or a program loaded from a storage portion 1208 into a random access memory (RAM) 1203. In the RAM 1203, various programs and data necessary for the operation of the system 1200 are also stored. The CPU 1201, the ROM 1202 and the RAM 1203 are connected to one another by means of a bus 1204. An input/output (I/O) interface 1205 is also connected to the bus 1204.

The following components are connected to the I/O interface 1205: an input portion 1206 including a keyboard, mouse, etc.; an output portion 1207 including, for example, a cathode ray tube (CRT), a liquid crystal display (LCD) and a speaker; a storage portion 1208 including a hard disk, etc.; and a communication portion 1209 including a network interface card such as an LAN card and a modem.

The communication portion 1209 performs communication processing by means of a network such as the Internet. A driver 1210 is also connected to an I/O interface 1205 as needed. A removable medium 1211 such as a magnetic disk, an optical disk, a magneto-optical disk and a semiconductor memory is installed on the drive 1210 as required, so that a computer program read therefrom is installed into the storage portion 1208 as required.

In particular, according to the embodiments of the present disclosure, the processes described above with reference to the flowcharts can be implemented as computer software programs. For example, the embodiments of the present disclosure include a computer program product comprising a computer program carried on a computer-readable medium. The computer program comprises a program code for executing the method as shown in the flowchart. In such embodiments, the computer program may be downloaded and installed from the network by means of a communication portion 1209, and/or installed from a removable medium 1211. When the computer program is executed by the central processing unit (CPU) 1201, the described functions defined in the system of the present disclosure are executed.

It should be noted that the computer-readable medium in the present disclosure may be a computer-readable signal medium or a computer-readable storage medium, or any combination thereof. The readable storage medium can be, for example, but is not limited to, an electronic, magnetic, optical, electromagnetic, infrared, or semiconductor system, apparatus, or device, or any combination thereof. More specific examples of the computer-readable storage medium may include, but are not limited to, electrical connections with one or more wires, a portable computer disk, a hard disk, a random access memory (RAM), a read-only memory (ROM), an erasable Programmable read-only memory (EPROM or flash memory), an optical fiber, a portable compact disk read-only memory (CD-ROM), an optical storage device, a magnetic storage device, or any suitable combination of the above. In the present disclosure, the computer-readable storage medium may be any tangible medium that can contain or store programs for use by or in combination with an instruction execution system, apparatus, or device. In the present disclosure, the computer-readable signal medium can include a data signal in baseband or propagated as part of a carrier wave, which carries readable program codes. Such a propagated data signal can take many forms, including but not limited to electromagnetic signals, optical signals, or any suitable combination of the above. The readable signal medium can also be any readable medium other than a readable storage medium, and the readable medium can send, propagate, or transmit a program for use by or in combination with an instruction execution system, apparatus, or device. The program codes contained on the readable medium can be transmitted through any appropriate medium, including but not limited to wireless, wired, optical fiber cable, RF, etc., or any suitable combination of the above.

The flowcharts and block diagrams in the drawings show possible architectures, functions, and operations of the system, method, and computer program product according to the embodiments of the present disclosure. In this regard, each block in the flowcharts or block diagrams may represent a module, a program segment, or part of codes containing one or more executable instructions for implementing specified logical functions. It is also to be noted that in some alternative implementations, the functions marked in the blocks may occur in an order different from those marked in the drawings. For example, two successive blocks may, in fact, be executed basically in parallel or in a reverse order, which depends on the functions involved. It is also to be noted that each block in the block diagrams and/or flowcharts and a combination of blocks in the block diagrams and/or flowcharts may be implemented by a special-purpose hardware-based system executing a specified function or operation or may be implemented by a combination of special-purpose hardware and computer instructions.

The modules involved in the embodiments of the present disclosure may be implemented by software or hardware. The described modules may also be arranged in a processor, and for example, may be described as: a processor comprising a communication module and an verification module. The names of these modules are not intended to limit the module itself in a certain circumstance, for example, the communication module may also be described as "a module for receiving digital currency transaction information sent from the second terminal application".

As another aspect, the present disclosure also provides a computer-readable medium. The computer-readable medium may be included in the device described in the above embodiments, or a stand-alone computer-readable medium not assembled into the device. The computer-readable medium carries one or more programs, and the one or more programs, when executed by the device, cause the device to comprise: receiving, by a first terminal application, digital currency transaction information sent from a second terminal application; executing, by the first terminal application, a corresponding anomaly determination operation according to the network connection state of a first operating institution back-end system, to determine that the digital currency transaction is anomalous, wherein the first operating institution back-end system is an operating institution back-end of the first terminal application, and the anomaly determination operation being one of the following two operations: an operation of searching a local double-spending information list for double-spending information corresponding to the digital currency transaction information and an operation of sending the digital currency transaction information to the first operating institution back-end system for verification. or cause the device to comprise: receiving, by a first operating institution back-end system, digital currency transaction information sent from a first terminal application, wherein the first operating institution back-end system is the operating institution back-end of the first terminal application, and the digital currency transaction information is sent from a second terminal application to the first terminal application; and using, by the first operating institution back-end system, a double-spending information list to perform double-spending verification on the digital currency transaction information, and if the double-spending verification has failed, returning to the first terminal application a verification result indicating that the digital currency transaction is anomalous. or cause the device to comprise: in cases where a second operating institution back-end system establishes a network connection with a second terminal application, before the second terminal application sends digital currency transaction information of a current transaction to a first terminal application, initiating, by the second operating institution back-end system, a double-spending verification of the digital currency transaction information of the current transaction, wherein the second operating institution back-end system is the operating institution back-end of the second terminal application; when the double-spending verification has failed, the second operating institution back-end system determining that the current transaction is anomalous, and terminating the current transaction. or cause the device to comprise: establishing, by a second operating institution back-end system, a network connection with a second terminal application; performing, by the second operating institution back-end system, double-spending verification on digital currency transaction information which has been sent from the second terminal application in an offline state, wherein the sent digital currency transaction information is sent from the second terminal application to other terminal applications; the second operating institution back-end system blocks the second terminal application when the double-spending verification has failed, wherein an offline state of the second terminal application is a state in which the second terminal application does not establish a network connection with the second operating institution back-end system.

According to the technical solution of the embodiments of the present disclosure, a first terminal application receives digital currency transaction information sent from a second terminal application, and executes a corresponding anomaly determination operation according to the network connection state of a first operating institution back-end system, to determine that the digital currency transaction is anomalous, the anomaly determination operation being one of the following two operations: an operation of searching a local double-spending information list for double-spending information corresponding to the digital currency transaction information and an operation of sending the digital currency transaction information to the first operating institution back-end system for verification; in cases where the first terminal application does not establish a network connection with the first operating institution back-end system, the first terminal application searches a local double-spending information list for double-spending information corresponding to the digital currency transaction information, and if the double-spending information corresponding to the digital currency transaction information is found, determine that the digital currency transaction is anomalous. The present disclosure can reduce the risk of double spending of the digital currency, and guarantee the transaction security of the digital currency. According to one embodiment of the present disclosure, the first terminal application may also search a local double-spending information list for double-spending information corresponding to digital currency transaction information or send the digital currency transaction information to the first operating institution back-end system for verification, it supports double-spending information verification in an offline scenario, an online scenario, a cross-institution scenario, etc., and the double-spending information verification comprises verification of on one or more pieces of user wallet information, digital currency information and digital currency version information, thereby realizing risk control in different dimensions.

The specific embodiments do not limit the scope of protection of the present disclosure. It will be apparent to a person skilled in the art that various modifications, combinations, sub-combinations, and replacements can be made according to design requirements and other factors. Any modifications, equivalent replacements, improvements, etc. made within the spirit and principle of the present disclosure shall belong to the scope of protection of the present disclosure.

## Claims

1. A method of verifying an anomalous digital currency transaction, comprising:
receiving, by a first terminal application, digital currency transaction information sent from a second terminal application; and
executing, the first terminal application, a corresponding anomaly determination operation according to a network connection state of a first operating institution back-end system, to determine that the digital currency transaction is anomalous, wherein the first operating institution back-end system is an operating institution back-end of the first terminal application, and the anomaly determination operation is one of the following two operations: an operation of searching a local double-spending information list for double-spending information corresponding to the digital currency transaction information and an operation of sending the digital currency transaction information to the first operating institution back-end system for verification.

2. The method as claimed in claim 1, wherein the executing, by the first terminal application, a corresponding anomaly determination operation according to the network connection state of a first operating institution back-end system, to determine that the digital currency transaction is anomalous comprises:
in cases where the first terminal application does not establish a network connection with the first operating institution back-end system, searching, by the first terminal application, a local double-spending information list for double-spending information corresponding to the digital currency transaction information; and if the double-spending information corresponding to the digital currency transaction information is found, determining, by the first terminal application, that the digital currency transaction is anomalous.

3. The method as claimed in claim 2, wherein double-spending information in the local double-spending information list is pre-synchronized to the first terminal application by the first operating institution back-end system.

4. The method as claimed in claim 3, wherein when connecting to a network or performing an online service, the first terminal application synchronously obtains the local double-spending information list from the first operating institution back-end system.

5. The method as claimed in claim 3 or 4, wherein the local double-spending information list is stored in a local security chip of the first terminal application.

6. The method as claimed in claim 1, wherein the executing, by the first terminal application, a corresponding anomaly determination operation according to the network connection state of a first operating institution back-end system, to determine that the digital currency transaction is anomalous comprises:
in cases where the first terminal application establishes a network connection with the first operating institution back-end system, searching, by the first terminal application, a local double-spending information list for double-spending information corresponding to the digital currency transaction information, or sending, by the first terminal application, the digital currency transaction information to the first operating institution back-end system for verification; and if the double-spending information corresponding to the digital currency transaction information is found in the local double-spending information list, or a verification result returned by the first operating institution back-end system is that the verification has failed, determining, by the first terminal application, that the digital currency transaction is anomalous.

7. The method as claimed in claim 6, wherein in cases where the first terminal application establishes a network connection with the first operating institution back-end system, an operation of sending the digital currency transaction information to the first operating institution back-end system for verification is preferentially executed.

8. The method as claimed in claim 6, wherein in cases where it is determined that the digital currency transaction is anomalous, the first terminal application sends a blocking request to the first operating institution back-end system, so that the first operating institution back-end system sends the blocking request to a second operating institution back-end system, and blocks the second terminal application and/or a digital currency string of a current transaction by means of the second operating institution back-end system, wherein the second operating institution back-end system is an operating institution back-end of the second terminal application.

9. The method as claimed in claim 6, wherein in cases where the digital currency transaction information is sent to the first operating institution back-end system for verification and it is determined that the digital currency transaction is anomalous, the first terminal application updates the local double-spending information list according to the digital currency transaction information.

10. The method as claimed in claim 1, wherein the double-spending information comprises one or more pieces of user wallet information, digital currency information, and digital currency version information, the digital currency information comprising a digital currency expression and/or a serial number.

11. A method of verifying an anomalous digital currency transaction, comprising:
receiving, by a first operating institution back-end system, digital currency transaction information sent from a first terminal application, wherein the first operating institution back-end system is an operating institution back-end of the first terminal application, and the digital currency transaction information is sent from a second terminal application to the first terminal application; and
using, by the first operating institution back-end system, a double-spending information list to perform double-spending verification on the digital currency transaction information, and if the double-spending verification has failed, returning, by the first operating institution back-end system, to the first terminal application a verification result indicating that the digital currency transaction is anomalous.

12. The method as claimed in claim 11, wherein the using, by the first operating institution back-end system, a double-spending information list to perform double-spending verification on the digital currency transaction information comprises:
searching, by the first operating institution back-end system, a stored double-spending information list for double-spending information corresponding to the digital currency transaction information, and if the double-spending information corresponding to the digital currency transaction information is found, determining, by the first operating institution back-end system, that the double-spending verification has failed.

13. The method as claimed in claim 12, wherein the double-spending information in the stored double-spending information list comprises first double-spending information and second double-spending information, the first double-spending information is generated by the first operating institution back-end system based on an anomaly of one or more of the following information: version information of a digital currency issued by the first operating institution itself, user wallet information corresponding to the issued digital currency, and digital currency information, and the second double-spending information is synchronously obtained by the first operating institution back-end system from other operating institutions back-end systems through interconnection and intercommunication.

14. The method as claimed in claim 11, wherein using, by the first operating institution back-end system, a double-spending information list to perform double-spending verification on the digital currency transaction information comprises:
sending, by the first operating institution back-end system, the digital currency transaction information to a first verification platform, so that the first verification platform searches its own double-spending information list for double-spending information corresponding to the digital currency transaction information, wherein the first verification platform is an operating institution back-end system other than the first operating institution back-end system or a double-spending information sharing platform shared by various operating institutions; and if the double-spending information corresponding to the digital currency transaction information is found, determining that the double-spending verification has failed.

15. The method as claimed in claim 11, further comprising:
if the double-spending verification is passed, sending, by the first operating institution back-end system, the digital currency transaction information to an issuing institution back-end system of the digital currency of this transaction; performing, by the issuing institution back-end system, information verification on one or more pieces of user wallet information, digital currency information and digital currency version information contained in the digital currency transaction information, and if the information verification has failed, returning, to the first terminal application, a verification result indicating that the digital currency transaction is anomalous.

16. The method as claimed in claim 11 or 15, wherein in cases where it is determined that the digital currency transaction is anomalous, the first operating institution back-end system sends a blocking request to a second operating institution back-end system, and blocks the second terminal application and/or a digital currency string of the current transaction by means of the second operating institution back-end system, wherein the second operating institution back-end system is an operating institution back-end of the second terminal application.

17. The method as claimed in claim 16, wherein the locking request is generated by the first operating institution back-end system, or sent from the first terminal application to the first operating institution back-end system.

18. A method of verifying an anomalous digital currency transaction, comprising:
in cases where a second operating institution back-end system establishes a network connection with a second terminal application, before the second terminal application sends digital currency transaction information of a current transaction to a first terminal application, initiating, by the second operating institution back-end system, a double-spending verification of the digital currency transaction information of the current transaction, wherein the second operating institution back-end system is an operating institution back-end of the second terminal application;
when the double-spending verification has failed, determining, by the second operating institution back-end system, that the current transaction is anomalous, and terminating, by the second operating institution back-end system, the current transaction.

19. The method as claimed in claim 18, wherein the initiating, by the second operating institution back-end system, a double-spending verification of digital currency transaction information of the current transaction, comprises:
performing, by the second operating institution back-end system, double-spending verification on the digital currency transaction information of the current transaction by means of a double-spending information list of a second verification platform, wherein the second verification platform is an operating institution back-end system other than the second operating institution back-end system or a double-spending information sharing platform shared by various operating institutions; and in cases where the double-spending information list contains the double-spending information corresponding to the digital currency transaction information of the current transaction, determining that the double-spending verification has failed.

20. The method as claimed in claim 18, wherein the initiating, by the second operating institution back-end system, a double-spending verification of digital currency transaction information of the current transaction, comprises:
sending, by the second operating institution back-end system, digital currency transaction information of the current transaction to an issuing institution back-end system of the digital currency of the current transaction; performing, by the issuing institution back-end system, information verification on one or more pieces of user wallet information, digital currency information and digital currency version information contained in the digital currency transaction information; and when the information verification has failed, determining that the double-spending verification has failed.

21. The method as claimed in claim 18, wherein the back-end system of the second operating institute terminates the current transaction by locking a digital currency string of the second terminal application and/or current transaction.

22. A method of verifying an anomalous digital currency transaction, comprising:
establishing, by a second operating institution back-end system, a network connection with a second terminal application;
performing, by the second operating institution back-end system, double-spending verification on digital currency transaction information which has been sent from the second terminal application in an offline state, wherein the sent digital currency transaction information is sent from the second terminal application to other terminal applications;
blocking, by the second operating institution back-end system, the second terminal application when the double-spending verification has failed, wherein an offline state of the second terminal application is a state in which the second terminal application does not establish a network connection with the second operating institution back-end system.

23. The method as claimed in claim 22, wherein the performing, by the second operating institution back-end system, double-spending verification on digital currency transaction information which has been sent from the second terminal application in an offline state comprises:
performing, by the second operating institution back-end system, double-spending verification on the digital currency transaction information which has been sent, by means of a double-spending information list of a third verification platform, wherein the third verification platform is a back-end system of an operating institutions other than the second operating institution back-end system or a double-spending information sharing platform shared by various operating institutions; in cases where the double-spending information corresponding to the digital currency transaction information which has been sent exists in the double-spending information list, determining that the double-spending verification has failed.

24. An apparatus for verifying an anomalous digital currency transaction, located in a first terminal application, comprising:
a communication module, configured to receive digital currency transaction information sent from a second terminal application;
a verification module, configured to execute a corresponding anomaly determination operation according to the network connection state of a first operating institution back-end system, to determine that the digital currency transaction is anomalous, wherein first operating institution back-end system is an operating institution back-end of the first terminal application, and the anomaly determination operation is one of the following two operations: an operation of searching a local double-spending information list for double-spending information corresponding to the digital currency transaction information and an operation of sending the digital currency transaction information to the first operating institution back-end system for verification.

25. An apparatus for verifying an anomalous digital currency transaction, located in a first operating institution back-end system, comprising:
a transaction information receiving module, configured to receive digital currency transaction information sent from a first terminal application, wherein the first operating institution back-end system is an operating institution back-end of the first terminal application, and the digital currency transaction information is sent from a second terminal application to the first terminal application; and
a transaction anomaly verification module, configured to use a double-spending information list to perform double-spending verification on the digital currency transaction information, and if the double-spending verification has failed, returning to the first terminal application a verification result indicating that the digital currency transaction is anomalous.

26. An apparatus for verifying an anomalous digital currency transaction, located in a second operating institution back-end system, comprising:
a double-spending verification module, configured to initiate a double-spending verification on digital currency transaction information of a current transaction in cases where a second operating institution back-end system establishes a network connection with a second terminal application and before a second terminal application sends digital currency transaction information of the current transaction to a first terminal application, wherein the second operating institution back-end system is an operating institution back-end of the second terminal application;
a transaction anomaly termination module, configured to determine, if the double-spending verification has failed, that the current transaction is anomalous, and terminate the current transaction.

27. An apparatus for verifying an anomalous digital currency transaction, located in a second operating institution back-end system, comprising:
a network connection establishing module, configured to establish a network connection with a second terminal application;
a double-spending information verification module, configured to perform double-spending verification on digital currency transaction information which has been sent from the second terminal application in an offline state, wherein the sent digital currency transaction information is sent from the second terminal application to other terminal applications, and the offline state of the second terminal application is a state in which the second terminal application does not establish a network connection with the second operating institution back-end system;
an application locking module, configured to lock the second terminal application if the double-spending verification has failed.

28. An electronic device, comprising:
one or more processors;
a memory for storing one or more programs,
when the one or more programs are executed by the one or more processors, the one or more processors implementing the method as claimed in any one of claims 1 to 23.

29. A computer readable medium, on which a computer program is stored, wherein when the computer program is executed by a processor, the method as claimed in any one of claims 1-23 is implemented.
